# FASCICULE DE BREVET EUROPEEN

(11) **EP 3 680 177 B1**
(45) Date de publication et mention de la délivrance du brevet: **16.06.2021**
(21) Numéro de dépôt: 20150355.4
(22) Date de dépôt: 06.01.2020
(51) Int. Cl.: B64D 29/00, F02K 1/72

(54) **NACELLE D'UN TURBORÉACTEUR COMPORTANT UNE PORTE D'INVERSION ET UN SYSTÈME D'AIDE AU DÉPLOIEMENT DE LA PORTE D'INVERSION**
GONDEL FÜR TURBOJET MOTOR MIT UMKEHRTÜR UND EIN HILFSSYSTEM FÜR DIE BEREITSTELLUNG DER UMKEHRTÜR
NACELLE FOR A TURBOJET ENGINE COMPRISING A REVERSING DOOR AND AN AIDING SYSTEM FOR DEPLOYING THE REVERSING DOOR

(30) Priorité: 14.01.2019 FR 1900306
(43) Date de publication de la demande: 15.07.2020
(73) Titulaire: AIRBUS OPERATIONS, 31060 Toulouse Cedex 9 (FR)
(72) Inventeur: GARDES, Pascal, 31530 LEVIGNAC (FR); RIDRAY, Frédéric, 32600 L'ISLE JOURDAIN (FR); GONCALVES, José, 31770 COLOMIERS (FR)
(74) Mandataire: Cabinet Le Guen Maillet

(56) Documents cités:
- FR-A1- 2 887 225
- US-A1- 2010 024 387
- US-A1- 2013 009 005
- US-A1- 2016 245 229
- US-A1- 2018 230 939

## Description

### DOMAINE TECHNIQUE

La présente invention concerne une nacelle d'un turboréacteur double flux qui comporte au moins une porte d'inversion et un système d'aide au déploiement de ladite porte d'inversion, un turboréacteur double flux comportant un moteur et une telle nacelle, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur comporte également une soufflante qui est montée à l'avant du moteur et l'air entraîné par la soufflante se divise en un flux primaire qui traverse le moteur et un flux secondaire qui traverse une veine secondaire délimitée entre le moteur et la nacelle.

La nacelle comporte un carter de soufflante qui s'étend autour de la soufflante et qui est fixe.

La nacelle comporte également un système d'inversion de poussée qui permet de dévier le flux secondaire vers l'extérieur de la nacelle et vers l'avant.

Le système d'inversion de poussée comporte au moins une porte d'inversion qui est mobile en rotation entre une position escamotée dans laquelle elle est positionnée en dehors de la veine secondaire de manière à ne pas faire obstacle au flux secondaire, et une position déployée dans laquelle elle est positionnée en travers de la veine secondaire de manière à faire obstacle au flux secondaire pour le diriger radialement à travers une fenêtre ouverte entre l'extérieur de la nacelle et la veine secondaire.

Selon le type de la nacelle, le système d'inversion de poussée peut également comporter au moins une porte extérieure qui est mobile en rotation entre une position escamotée dans laquelle elle est positionnée en continuité aérodynamique avec le carter de soufflante et une position déployée dans laquelle elle est ouverte vers l'extérieur.

Classiquement, la porte d'inversion est montée mobile en rotation sur la structure de la nacelle et un système de déploiement la déplace de la position escamotée à la position déployée et inversement. Un tel système de déploiement comporte par exemple des vérins, des moteurs, etc.

Bien que le système de déploiement d'une telle porte d'inversion donne entière satisfaction, il est souhaitable de trouver un système d'aide au déploiement qui facilite le décollage de la porte d'inversion de sa position escamotée.

Les documents FR-A-2887 225, US-A-2016/245229, US-A-2018/230939, US-A-2010/024387 et US-A-2013/009005 divulguent des nacelles de l'état de la technique.

### EXPOSE DE L'INVENTION

Un objet de la présente invention est de proposer une nacelle d'un turboréacteur double flux qui comporte au moins une porte d'inversion et un système d'aide au déploiement de ladite porte d'inversion.

A cet effet, est proposée une nacelle pour un turboréacteur double flux, ladite nacelle comportant :
- une structure fixe dans laquelle est agencée une veine dans laquelle circule un flux secondaire,
- une porte d'inversion mobile en rotation autour d'un axe de rotation, entre une position escamotée dans laquelle la porte d'inversion se positionne en dehors de la veine et une position déployée dans laquelle la porte d'inversion se positionne en travers de la veine pour laisser libre une fenêtre ouverte entre la veine et l'extérieur,
- un système d'ouverture qui assure le déplacement de la porte d'inversion de la position escamotée à la position déployée et inversement, et
- un système d'aide au déploiement qui comporte un élément ressort qui est agencé pour exercer, contre la porte d'inversion, une force qui tend à repousser ladite porte d'inversion de sa position escamotée.

La nacelle est caractérisée en ce que, le système d'aide au déploiement comporte un tambour monté mobile en rotation sur la structure fixe, le système d'aide au déploiement comporte un doigt fixé au tambour et présentant une extrémité libre qui, en position escamotée, est en appui contre la porte d'inversion, le système d'aide au déploiement comporte un levier fixé au tambour, et l'élément ressort est un ressort de compression qui, par une première extrémité, s'appuie contre la structure fixe, et qui, par une deuxième extrémité, s'appuie contre le levier.

Un tel système d'aide au déploiement facilite le décollage de la porte d'inversion depuis sa position escamotée.

L'invention propose également un turboréacteur double flux comportant un moteur et une nacelle selon le mode de réalisation précédent, où la veine est délimitée entre le moteur et la nacelle.

L'invention propose également un aéronef comportant un turboréacteur double flux selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant une nacelle selon l'invention, et
[Fig. 2] est une vue en coupe par un plan vertical de la nacelle selon l'invention avec la porte d'inversion en position escamotée.

### EXPOSE DETAILLE DE MODES DE REALISATION

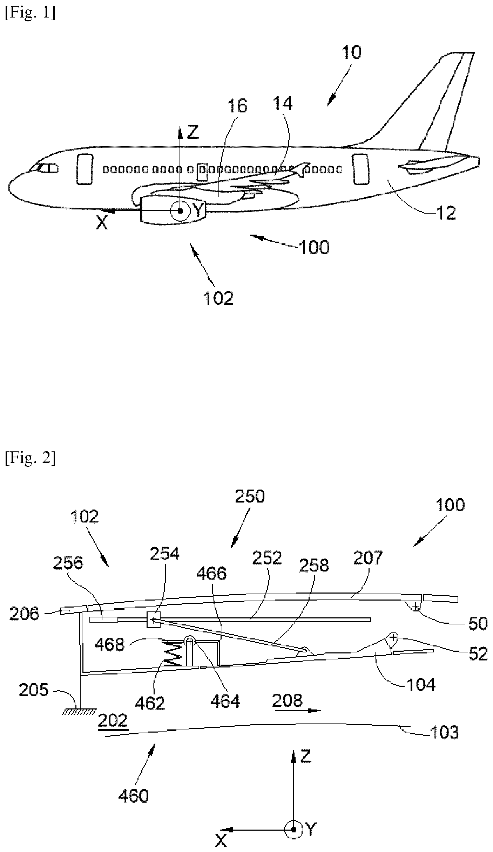

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et qui est orienté positivement dans le sens d'avancement de l'aéronef 10, on appelle Y l'axe transversal du turboréacteur double flux 100 qui est horizontal lorsque l'aéronef est au sol, et Z l'axe vertical lorsque l'aéronef est au sol, ces trois directions X, Y et Z étant orthogonales entre elles.

La Fig. 2 montre le turboréacteur double flux 100 qui comporte une nacelle 102 et un moteur qui est logé à l'intérieur de la nacelle 102. Le moteur est matérialisé ici par sa paroi extérieure 103.

La nacelle 102 présente une structure fixe 205 qui comporte un capot fixe 206.

Une veine 202 dans laquelle circule un flux secondaire 208 est agencée dans la structure fixe 205, entre la structure fixe 205, et plus généralement la nacelle 102, et le moteur.

La nacelle 102 comporte au moins une porte d'inversion 104. En particulier, il peut y avoir deux portes d'inversion 104 disposées l'une en face de l'autre, ou plus de deux portes d'inversion 104 réparties régulièrement sur la périphérie de la nacelle 102. Chaque porte d'inversion 104 permet selon sa position d'inverser la poussée du turboréacteur double flux 100.

Dans la description qui suit, l'invention est plus particulièrement décrite pour une porte d'inversion 104, mais elle s'applique de la même manière pour chaque porte d'inversion 104 lorsqu'il y en a plusieurs.

La porte d'inversion 104 est ici à l'intérieur de la nacelle 102.

Pour chaque porte d'inversion 104, le capot fixe 206 délimite une fenêtre qui s'ouvre entre la veine 202 et l'extérieur.

Dans le mode de réalisation de l'invention présenté ici, la nacelle 102 présente un capot articulé 207 qui est monté mobile en rotation autour d'un premier axe de rotation 50 qui est au niveau du bord aval du capot articulé 207. Le capot articulé 207 est à l'extérieur par rapport à la porte d'inversion 104.

Le capot articulé 207 est mobile entre une position escamotée et une position déployée. En position escamotée, le capot articulé 207 ferme la fenêtre et prolonge le capot fixe 206 pour former l'enveloppe extérieure de la nacelle 102. En position déployée, le capot articulé 207 pivote vers l'extérieur autour du premier axe de rotation 50 et se projette vers l'extérieur pour laisser libre la fenêtre.

La porte d'inversion 104 est montée mobile en rotation autour d'un deuxième axe de rotation 52 entre une position escamotée et une position déployée pour laquelle l'inversion de poussée a une efficacité maximale. Dans le mode de réalisation de l'invention présenté ici, le deuxième axe de rotation 52 est au niveau du bord aval de la porte d'inversion 104.

En position escamotée, la porte d'inversion 104 ferme la fenêtre et se positionne en dehors de la veine 202, et plus particulièrement ici dans le prolongement de la partie intérieure du capot fixe 206. En position déployée, la porte d'inversion 104 s'ouvre vers l'intérieur et la paroi extérieure 103 se positionne en travers de la veine 202 pour laisser libre la fenêtre et pour dévier au moins une partie du flux secondaire 208 vers l'extérieur à travers la fenêtre. L'extrémité libre de la porte d'inversion 104 se rapproche alors de la paroi extérieure 103.

Dans le mode de réalisation de l'invention présenté sur la Fig. 2, le premier axe de rotation 50 et le deuxième axe de rotation 52 sont solidaires de la structure fixe 205 et dans un plan perpendiculaire à l'axe longitudinal X.

La partie intérieure du capot fixe 206 et la porte d'inversion 104 en position escamotée constituent la surface extérieure de la veine 202 et la paroi extérieure 103 constitue la surface intérieure de la veine 202.

Dans la mesure où le capot articulé 207 ne constitue pas un élément essentiel de l'invention décrite ici, les moyens pour le déplacer de sa position escamotée à sa position déployée ne seront pas décrits plus en détail. Il sera uniquement mentionné que ces moyens peuvent comporter différents éléments comme des vérins, moteurs, glissières, etc.

La nacelle 102 comporte également un système d'ouverture 250 qui assure le déplacement de la porte d'inversion 104 de la position escamotée à la position déployée et inversement.

Le système d'ouverture 250 comporte une glissière 252 qui s'étend parallèlement à l'axe longitudinal X, un coulisseau 254 monté mobile en translation le long de la glissière 252 et un actionneur 256, préférentiellement un vérin, qui déplace le coulisseau 254 le long de la glissière 252. L'actionneur 256 est commandé par une unité de contrôle, du type processeur, qui commande ledit actionneur 256 selon les besoins de l'aéronef 10. Dans le cas d'un vérin, l'unité de contrôle commande alternativement l'allongement et le raccourcissement du vérin.

Le système d'ouverture 250 comporte également une bielle 258 qui est montée articulée entre le coulisseau 254 et la porte d'inversion 104. Ainsi, un déplacement du coulisseau 254 va déplacer la bielle 258 qui va, à son tour, déplacer en rotation la porte d'inversion 104.

Le système d'ouverture 250 décrit ci-dessus peut prendre d'autres formes comme, par exemple, un moteur monté sur le deuxième axe de rotation 52.

Pour aider au décollage de la porte d'inversion 104 depuis sa position escamotée, la nacelle 102 comporte un système d'aide au déploiement 460.

Le système d'aide au déploiement 460 comporte un élément ressort 462 qui est agencé pour exercer, contre la porte d'inversion 104, une force qui tend à repousser ladite porte d'inversion 104 de sa position escamotée.

Le système d'aide au déploiement 460 comporte un tambour 464 monté mobile en rotation sur la structure fixe 205 autour d'un troisième axe de rotation 466 qui est ici parallèle au deuxième axe de rotation 52.

Le système d'aide au déploiement 460 comporte un doigt 466 fixé au tambour 464 et présentant une extrémité libre qui, en position escamotée, est en appui contre la porte d'inversion 104 de l'autre côté de la porte d'inversion 104 par rapport à la veine 202. Le doigt 466 est positionné au voisinage du bord avant de la porte d'inversion 104.

Le système d'aide au déploiement 460 comporte un levier 468 fixé au tambour 464.

L'élément ressort est un ressort hélicoïdal de compression 462 qui, par une première extrémité, s'appuie contre la structure fixe 205, et qui, par une deuxième extrémité, s'appuie contre le levier 468 engendrant ainsi une force qui pousse le doigt 466 contre la porte d'inversion 104.

En position escamotée, le ressort de compression 462 est sous pression.

## Revendications

1. Nacelle (102) pour un turboréacteur double flux (100), ladite nacelle (102) comportant :
- une structure fixe (205) dans laquelle est agencée une veine (202) dans laquelle circule un flux secondaire (208),
- une porte d'inversion (104) mobile en rotation autour d'un axe de rotation (52), entre une position escamotée dans laquelle la porte d'inversion (104) se positionne en dehors de la veine (202) et une position déployée dans laquelle la porte d'inversion (104) se positionne en travers de la veine (202) pour laisser libre une fenêtre ouverte entre la veine (202) et l'extérieur,
- un système d'ouverture (250) qui assure le déplacement de la porte d'inversion (104) de la position escamotée à la position déployée et inversement, et
- un système d'aide au déploiement (460) qui comporte un élément ressort (462) qui est agencé pour exercer, contre la porte d'inversion (104), une force qui tend à repousser ladite porte d'inversion (104) de sa position escamotée,
la nacelle (102) étant **caractérisée en ce que** le système d'aide au déploiement (460) comporte un tambour (464) monté mobile en rotation sur la structure fixe (205), **en ce que** le système d'aide au déploiement (460) comporte un doigt (466) fixé au tambour (464) et présentant une extrémité libre qui, en position escamotée, est en appui contre la porte d'inversion (104), **en ce que** le système d'aide au déploiement (460) comporte un levier (468) fixé au tambour (464), et **en ce que** l'élément ressort est un ressort de compression (462) qui, par une première extrémité, s'appuie contre la structure fixe (205), et qui, par une deuxième extrémité, s'appuie contre le levier (468).

2. Turboréacteur double flux (100) comportant un moteur et une nacelle (102) selon la revendication précédente, où la veine (202) est délimitée entre le moteur et la nacelle (102).

3. Aéronef (10) comportant un turboréacteur double flux (100) selon la revendication précédente.

## Patentansprüche

1. Gondel (102) für ein Zweistromstrahltriebwerk (100), wobei die Gondel (102) Folgendes umfasst:
- eine feste Struktur (205), in der ein Kanal (202) angeordnet ist, in dem ein Sekundärstrom (208) zirkuliert,
- eine Schubumkehrklappe (104), die um eine Drehachse (52) zwischen einer weggeklappten Stellung, in der die Schubumkehrklappe (104) außerhalb des Kanals (202) positioniert ist, und einer ausgeklappten Stellung, in der die Schubumkehrklappe (104) dahingehend über den Kanal (202) hinweg positioniert ist, eine Öffnung zwischen dem Kanal (202) und der Außenumgebung freizulassen, drehbeweglich ist,
- ein Öffnungssystem (250) zum Verstellen der Schubumkehrklappe (104) aus der weggeklappten Stellung in die ausgeklappte Stellung und umgekehrt, und
- ein Ausklappunterstützungssystem (460), das ein Federelement (462) umfasst, das dazu angeordnet ist, an die Schubumkehrklappe (104) eine Kraft anzulegen, die tendenziell die Schubumkehrklappe (104) aus ihrer weggeklappten Stellung drückt,
wobei die Gondel (102) **dadurch gekennzeichnet ist, dass** das Ausklappunterstützungssystem (460) eine Trommel (464) umfasst, die drehbeweglich an der festen Struktur (205) befestigt ist, dass das Ausklappunterstützungssystem (460) einen Finger (466) umfasst, der an der Trommel (464) fixiert ist und ein freies Ende aufweist, das in der weggeklappten Stellung an der Schubumkehrklappe (104) anliegt, dass das Ausklappunterstützungssystem (460) einen Hebel (468) umfasst, der an der Trommel (464) fixiert ist, und dass das Federelement eine Druckfeder (462) ist, die an einem ersten Ende an der festen Struktur (205) anliegt und die an einem zweiten Ende an dem Hebel (468) anliegt.

2. Zweistromstrahltriebwerk (100), das ein Triebwerk und eine Gondel (102) nach dem vorhergehenden Anspruch umfasst, wobei der Kanal (202) zwischen dem Motor und der Gondel (102) begrenzt wird.

3. Luftfahrzeug (10), das ein Zweistromstrahltriebwerk (100) nach dem vorhergehenden Anspruch umfasst.

## Claims

1. Nacelle (102) for a two-flow turbine engine (100), said nacelle (102) comprising:
- a fixed structure (205) in which there is arranged a duct (202) in which a secondary flow (208) flows,
- a reverser door (104) that is able to move in rotation about an axis of rotation (52), between a stowed position in which the reverser door (104) is positioned outside the duct (202), and a deployed position in which the reverser door (104) is positioned across the duct (202) so as to leave free a window that is open between the duct (202) and the outside,
- an opening system (250) that moves the reverser door (104) from the stowed position to the deployed position and vice versa, and
- a deployment aid system (460) that comprises a spring element (462) which is arranged so as to exert, against the reverser door (104), a force that tends to push said reverser door (104) away from its stowed position,
the nacelle (102) being **characterized in that** the deployment aid system (460) comprises a drum (464) that is mounted so as to be able to move in rotation on the fixed structure (205); **in that** the deployment aid system (460) comprises a finger (466) that is fixed to the drum (464) and that has a free end which, in the stowed position, presses against the reverser door (104); **in that** the deployment aid system (460) comprises a lever (468) that is fixed to the drum (464) ; and **in that** the spring element is a compression spring (462) which, at a first end, presses against the fixed structure (205), and which, at a second end, presses against the lever (468).

2. Two-flow turbine engine (100) comprising a motor and a nacelle (102) according to the preceding claim, the duct (202) being delimited between the motor and the nacelle (102).

3. Aircraft (10) comprising a two-flow turbine engine (100) according to the preceding claim.
